Europäisches Patentamt

European Patent Office

Office européen des brevets

(11) Veröffentlichungsnummer: **0 104 563**
B1

# EUROPÄISCHE PATENTSCHRIFT

(45) Veröffentlichungstag der Patentschrift:
19.03.86

(51) Int. Cl.⁴: **A 23 K 1/18**

(21) Anmeldenummer: 83109218.4

(22) Anmeldetag: 17.09.83

(54) Verfahren zur Herstellung von Futterfolien.

(30) Priorität: 28.09.82 DE 3235764

(43) Veröffentlichungstag der Anmeldung:
04.04.84 Patentblatt 84/14

(45) Bekanntmachung des Hinweises auf die Patenterteilung:
19.03.86 Patentblatt 86/12

(84) Benannte Vertragsstaaten:
AT BE CH DE FR GB IT LI LU NL SE

(56) Entgegenhaltungen:
DE - A - 2 824 042

**Die Akte enthält technische Angaben, die nach dem
Eingang der Anmeldung eingereicht wurden und die
nicht in dieser Patentschrift enthalten sind.**
(73) Patentinhaber: Tetra Werke Dr.rer.nat. Ulrich Baensch
GmbH, Herrenteich 78, D-4520 Melle 1 (DE)

(72) Erfinder: von Poeppinghausen, Klaus-Jürgen,
Dipl.-Landwirt, Bakumer Strasse 57, D-4520 Melle 1 (DE)

(74) Vertreter: Mansmann, Ivo, c/o Gödecke AG -
Patentabteilung Postfach 569 - Mooswaldallee 1-9,
D-7800 Freiburg (DE)

## Beschreibung

Aus den DE-PS 26 33 659 und 28 24 042 ist es bekannt, pflanzliche und/oder tierische Futtermittel in feuchter bzw. nasser Form durch Kaltwalzen in Futterfolien zu überführen.

Ein Problem bei der Herstellung von Futterfolien nach dem Kaltwalzverfahren besteht darin, daß die noch feuchten Folien aus dem zuvor zubereiteten Feuchtgranulat, z.B. Mischfuttergranulat, zum Haftenbleiben an den bei der Herstellung der Futterfolien verwendeten Walzen neigen. Das Hafterbleiben oder Ankleben führt dazu, daß bei der Trennung der Futterfolie von der Walze die Folie entweder als Ganzes reißt oder aus der Folie einzelne Futtermittelbestandteile herausgerissen werden. Eine solche beschädigte Futterfolie ist dann nicht handelsfähig. In diesem Zusammenhang kommt noch erschwerend hinzu, daß die Neigung der noch feuchten Folie zum Haftenbleiben an der (den) Walze(n) nicht vorherbestimmbar ist, sondern von Futtermittelmischung zu Futtermittelmischung variiert.

Ein weiteres Problem bei der Durchführung eines Kaltwalzverfahrens zur Herstellung von Futterfolien bildet die durch Reibung bedingte Erwärmung der Walzen und zwangsläufig auch der damit in Berührung stehenden Futterfolien. Die Erwärmung der Walzen und der damit in Verbindung stehenden Futterfolie wird mit zunehmender Arbeitsgeschwindigkeit immer stärker.

Aus ernährungsphysiologischen Gründen muß jedoch eine vollwertige Mischfutterfolie für Nutz- und Heimtiere müglichst vielseitig aus eiweiß- und kohlenhydratreichen Rohstoffen zusammengesetzt sein. Dabei ist nicht zu vermeiden, daß auch Rohstoffe eingesetzt werden müssen, die an den Walzen besonders stark festkleben wenn der Kontakt zwischen Walze und Futterfolie von einer Erwärmung begleitet ist. Dies trifft insbesondere für bestimmte Bindemittelkomponenten zu. Desweiteren ist aus ernährungsphysiologischen Gründen noch darauf zu achten, daß nicht irgen welche Futtermittelbestandteile durch die Erwärmung denaturiert werden und damit einer Ausnutzung durch die Nutz- und Heimtiere verloren gehen.

Der Erfindung lag nun die Aufgabe zugrunde, das Problem des Festklebens von aus Futterfeuchtgranulat hergestellten feuchten Futterfolien an den beim Kaltwalzen verwendeten Aufgabe- und Abgabewalzen zu vermeiden und gleichzeitig eine schonende Verarbeitung der Futterbestandteile zu gewährleisten.

Gegenstand der Erfindung ist somit ein Verfahren zur Berstellung von Futterfolien nach dem Kaltwalzverfahren, welches dadurch gekennzeichnet ist, daß man mindestens eine der beim Kaltwalzverfahren benutzten Walzen auf eine Temperatur unter 10°C kühlt.

Für eine erfolgreiche Durchführung des erfindungsgemäßen Verfahrens spielt es keine Rolle, wie die Walzen der verwendeten Walzvorrichtung, z.B. eines Walzenstuhls oder Kalanders, gekühlt wird, sofern lediglich eine Temperatur der Walzenmantelfläche von unter +10°C erreicht wird. Es ist vorteilhaft die Kühlung der Walze(n) als Innenkühlung durchzuführe und/oder sämtliche beteiligte Walzen zu kühlen.

Bei Durchführung des Verfahrens gemäß der Erfindung können zur Herstellung von Futterfolien weit mehr und insbesondere auch Preisgünstigere Rohstoffe und Bindemittelmischungen verwendet werden als dies bisher unter Beachtung des Anklebens verschiedener Futtermittel- oder Bindemittelbestandteile an den Walzen möglich war. Darüber hinaus läßt sich die Arbeitsgeschwindigkeit ohne Gefahr einer Denaturierung irgendwelcher wärme empfindlicher Futtermittelbestandteile erhöhen.

Neben bisher als Rohstoffe und Bindemittel noch nicht verwendeten und aus futtermittelrechtlichen Gründen zulässigen Rohstoffen und Bindemittelbestandteilen eignen sich zur Herstellung der Futterfolien sämtliche zum gleichen Zweck bisher auch bereits verwendeten Pflanzlichen und tierischen Futtermittelbestandteile.

Bisher verwendete Bindemittel sind beisPielsweise übliche Eiweißbindemittel tierischer Herkunft, Stärken, Polysaccharide, Alginate und Zellulosederivate. In vielen Fällen können auch Preßstoffe mitverwendet werden. Besonders gute Ergebnisse erzielt man, wenn man dem zur Futterfolienherstellung verwendeten Feuchtgranulat gemäß Europ. Patentanmeldung 83109219.2 als Trennmittel Glyzeridgemische aus futtermittelrechtlich zulässigen Gemischen von Triglyzeriden mit Mono- und Diglyzeriden zusetzt.

## Patentansprüche

1. Verfahren zur Herstellung von Futterfolien nach dem Kaltwalzverfahren, dadurch gekennzeichnet, daß man mindestens eine der beim Kaltwalzverfahren benutzten Walzen auf eine Temperatur unter 10°C kühlt.

2. Verfahren nach Anspruch 1, dadurch gekennzeichnet, daß man die Kühlung der Walze(n) als Innenkühlung durchführt.

3. Verfahren nach Anspruch 1, dadurch gekennzeichnet, daß man sämtliche beteiligten Walzen kühlt.

## Claims

1.) Process for the manufacture of feed foils according to the cold roll Process, characterized by cooling at least one of the rollers used in the cold roll Process to a temPerature of below 10°C.

2.) Process according to Claim 1, wherein the cooling of the roller(s) is carried out by means of interior cooling.

3.) Process according to Claim 1, wherein all rollers concerned are cooled.

## Revendications

1.- Procédé de fabrication d'aliments destinés aux animaux selon le procédé du laminage à froid, caractérisé en ce que l'on refroidità une température inférieure à 10°C au moins l'un des cylindres de laminoir utilisé pour le procédé du laminage à froid.

2.- Procédé selon la revendication 1, caractérisé en ce que l'on réalise le refroidissement du ou des cylindre(s) de laminoir sous la forme d'un refroidissement interne.

3.- Procédé selon la revendication 1, caractérisé en ce que l'on refroidit les cylindres de laminoir dans leur totalité.